# EUROPEAN PATENT SPECIFICATION

(11) **EP 3 191 786 B1**
(45) Date of publication and mention of the grant of the patent: **31.03.2021**
(21) Application number: 15767112.4
(22) Date of filing: 09.09.2015
(51) Int. Cl.: F28F 19/00, F25C 1/14, A23G 9/22, F28G 3/10, B01D 1/22

(54) **SCRAPED SURFACE HEAT EXCHANGER AND METHOD FOR PREPARING FOOD**
KRATZWÄRMETAUSCHER UND VERFAHREN ZUR ZUBEREITUNG VON SPEISEN
ÉCHANGEUR DE CHALEUR À GRATTER ET PROCESSUS DE PRÉPARATION DES ALIMENTS

(30) Priority: 09.09.2014 EP 14184092; 09.09.2014 EP 14184089; 09.09.2014 EP 14184086
(43) Date of publication of application: 19.07.2017
(73) Proprietor: Société des Produits Nestlé S.A., 1800 Vevey (CH)
(72) Inventor: TAYLOR, Jonathan, Stillington Yorkshire Y061 1LL (GB)
(74) Representative: Lumsden, Stuart Edward Henry
(86) International application number: PCT/EP2015/070632
(87) International publication number: WO 2016/038098

(56) References cited:
- WO-A1-88/04198
- DE-A1- 19 612 957
- FR-A- 1 183 901
- GB-A- 829 018

## Description

### Technical Field

The present invention relates to heat exchangers such as those having an internal blade for mixing the contents also referred to herein as a scraped surface heat exchanger.

### Background Art

Scraped surface heat exchangers are widely used in the food industry mainly for the continuously heating and cooling viscous food products. A conventional heat exchanger known in the art typically comprises a cylindrical chamber surrounded by a jacket, a rotating shaft mounted in the chamber and a series of blade scrapers which are hingedly connected to the rotating shaft, so as to make the blades scrape the inner surface of the chamber during operation.

A cooling or heating medium such as ammonia, glycerol, hot water or steam is circulated through the jacketed cylindrical chamber and provides heat exchange by the usual heat exchange process. The product is passed through under pressure through a conduit located at one end of the heat exchanger and exits the heat exchanger through a conduit at its opposite end. During the course of its movement through the heat exchanger between these conduits (which movement can also be used to define a longitudinal direction), the product is scraped off the inner surface of the cylindrical chamber by means of blade scrapers mounted onto the rotatable shaft, thereby effecting heating or cooling as desired.

In conventional scraped surface heat exchangers the blade scrapers are connected to the rotatable shaft by hinged pin connections so that the blade scrapers are free to pivot out from their connection in an angular movement. Typically the blade scrapers are designed with apertures and/or slits and are secured to the rotor by means of suitable locating means such as rivets, pins and/or screws.

Furthermore in conventional scraped surface heat exchangers the blade scrapers are in direct contact with the inner surface of the heat exchanger. The leading edges of the conventional blades are in continuous contact with the inner surface of the heat exchanger continuously scrapping the material off the inner surface.

US 7 302 999 B2 discloses a scraped surface heat exchanger scraper blade wherein the blade can pivot relative to the drive shaft; it further describes a scraped surface heat exchanger scraper blade wherein the blade has a second end with an edge for scraping contact against the scraped surface, such that it contacts the scraped surface when in use. GB 2232 469 A discloses a scraped surface heat exchangers wherein the blade scrapers are connected pivotally to the rotor by use of a hinge means and that the scraping edges of the scraper blades bear with a knife edge on the heat exchanging surface of the stator. US 3 385 354 discloses blades connected by pins to the central drive shaft of the scraped surface heat exchanger, however the blades are freely pivotable through the annular space defined by the jacketed heat exchange cylinder and revolving shaft.. It further describes that the leading edges of the scraper blades are forced outwardly into continuous contact with the inner wall of the heat exchange surface and the sharpened edges of these blades continuously scrape the material being processed off the inner wall of the heat exchange surface.

DE1962957 and WO8804198 disclose the use of scraped surface heat exchangers in the food industry.

In the conventional scraped surface heat exchangers described above the blades are free to rotate about an axis relative to the rotating shaft, wherein the blades pivot inwardly and outwardly with each revolution of the rotating shaft, so that there is efficient heat exchange. There are certain disadvantages to the pivoting blade scrapers described in the prior art. When the product builds up within the heat exchanger Pivoting scraper blades are prone to move radially and/or tangentially with respect to the shaft which is undesirable as it reduces scraping efficiency. This is especially a problem when treating viscous products such as chocolate.

Furthermore in the conventional scraped surface heat exchangers as described the blades continuously scrape off the product from the inner surface during its passage through the heat exchanger to ensure that the surface is scraped clean of any static film material and is simultaneously replaced by additional material which undergoes the same process. This enables efficient heat transfer exchange between the inner surface of the heat exchanger and the material being processed.

There are certain disadvantages to the scraping blades as described in the prior art because the efficiency of the scraping blades is largely dependent upon the nature and thickness of the material being processed. For instance viscous material such as chocolate there is undesirable thick static film that remains on the inner surface of the heat exchanger.

Accumulation of viscous products on the inner cylindrical surface of the heat exchanger, also known as product fouling, pushes the scraper blade away from the inner surface, leading to inconsistent heating and cooling and overall poor heat transfer efficiency. Additionally, product build up on the leading edge of the scraper blade pushes the blades inwardly causing abrasive damage to the heat exchange surface of the cylindrical chamber and excessive wear and damage to the scraper blade.

Accumulation of viscous products on the inner cylindrical surface of the heat exchanger also known as product fouling leads to inconsistent heating and cooling and overall poor heat transfer efficiency. Product is prone to building up on the leading edge of the scraper blade causing abrasive damage to the heat exchange surface of the cylindrical chamber and excessive wear and damage to the scraper blade.

Product fouling causes further problems as the manufacturing process must be periodically interrupted in a production line where the heat exchanger is arranged to clean the exchanger, remove accumulated product and/or replace or repair damage to the blades and/or inner surface of the heat exchanger. This leads to considerable financial loss. Accordingly there is a need to provide a scraped surface heat exchanger scraper blade having features which avoids the undesirable radial and tangential movements relative to the shaft and also provides a more efficient scraping action to prevent product build up and yet still maintains desirable scraping performance and improved blade life. Furthermore there is a need to develop an improved blade for a scraped surface heat exchanger scraper that prevents and/or reduces product fouling and/or damage to the scraped surface heat exchanger, thereby preventing unnecessary downtime in production.

Another aspect of the present invention addresses a further problem. In conventional scraped surface heat exchangers due to the design of the exchanger the rotatable shafts are rotated at certain speeds, typically from 300 to 350 rpm for optimal efficiency of operation of these exchangers. Such high rotational speeds results in a higher risk of product degradation and burning due to increased friction between the blade, product and the inner surface (cylindrical barrel) of the exchanger. Yet a rotatable shaft operated at too low rotational speeds results in undesirable product build up as the product is not removed rapidly from the surface and a less efficient heat transfer exchange occurs. There is a need to provide a heat exchanger designed to be operated at rotational speed optimal for good efficiency of the heat transfer when mixing viscous materials, and to substantially avoid and/or mitigate problems associated with product build up on the inner surface of the scraped heat exchange .

It is an object of the invention to solve some or all of the problems described herein.

### Summary of invention

In accordance with the present invention there is provided a scraped surface heat exchanger comprising a heat exchange surface and a shaft capable of periodic motion with respect to said surface (preferably such movement being rotational about an axis along the shaft), said shaft having at least one mounting means for engaging a sweeping element, wherein said sweeping element comprises a blade having at least one aperture for engaging with the mounting means such that the sweeping element is connected to the mounting means and characterised in that when the rotatable shaft is moving in periodic motion (preferably rotating) relative to the heat exchange surface the sweeping element has substantially no movement relative to the moving (preferably rotating) shaft and said sweeping element has substantially no contact with the inner surface of the heat exchanger, and the sweeping element comprises a blade having a leading edge with a distance of 0.05 mm to 10 mm, preferably 0.1 mm to 8mm, more preferably 0.2 to 5 mm from the inner surface of the heat exchanger.

In the present invention the mounting means comprises at least one engagement means that engages the sweeping element such that the sweeping element is connected to the mounting means wherein when the rotatable shaft is rotating relative to the heat exchange surface the sweeping element has substantially no movement relative to the rotating shaft. In the present invention the engagement mean comprises a projection extending outwardly at a substantially right angle to the rotatable shaft for engagement with the sweeping element so as to engage the sweeping element such that the sweeping element is connected to the mounting means wherein when the rotatable shaft is rotating relative to the heat exchange surface the sweeping element has substantially no movement relative to the rotating.

In the present invention the projection is a substantially T-shaped element extending outwardly at a substantially right angle to the rotatable shaft for engagement with the sweeping element and the blade has a plurality of substantially T-shaped apertures longitudinally arranged through the blade body for engaging with the mounting means.

According to another preferred embodiment of the present invention the rotatable shaft has an optimal rotational speed of from 350 and 1000 ppm, more preferably from 400 to 800 rpm, even more preferably between 500 and 700 rpm, most preferably from 550 to 650 rpm. A further aspect of the invention comprises a method for preparing food according to claim 5.

In the invention the sweeping element is attached to the rotatable shaft by a non-pivotal connection and said sweeping element has substantially no contact with the inner surface of the heat exchanger.

Preferably a sweeping element according to present invention wherein said substantially T-shaped apertures being linearly arranged adjacent between 2 and 10 mm, preferably 3 and 8 mm, more preferably 5 to 7 mm from the trailing edge of the blade.

It was found for the invention that by attaching the sweeping element to the rotatable shaft according to the invention by means of a non-pivotal connection and having said sweeping element not in direct contact with the inner surface of the heat exchanger, there was little or no product fouling observed on the inner surface of the heat exchanger, resulting in consistent and smoother temperature changes (whether heating or cooling) and/or improved superior heat transfer efficiency.

It was further found that according to the invention by attaching the sweeping element to the rotatable shaft according to the invention by means of a non-pivotal connection and having said sweeping element not in direct contact with the inner surface of the heat exchanger, there was advantageously little or no product fouling observed on the leading edge of the scraping element, resulting in little or no abrasive damage to the heat exchange surface of the heat exchanger and little or no excessive wear or damage to the scraper blade resulting in an improved blade life.

Another advantage according to the invention is that by locking the movement of the blades such that radial and tangential movements of the blades relative to the rotatable shaft are inhibited, the risk of an incorrect orientation of the blades is prevented.

A further advantage according to one embodiment of the invention is that there are a with the inner surface of the heat exchanger such that these blades continuously scrape the material being processed off the inner surface of the heat exchanger. This results in efficient heat transfer as the material is scrapped clean off the surface so as to ensure no product accumulation and/or burning and is swiftly replaced by additional material which further undergoes the heat exchange process.

It is further well known in the art that the pivoting nature of the scraper blades exerts a kneading action with each oscillation inwardly and outwardly as the shaft rotates and that combination of these actions creates a higher turbulence within the annular space but also thoroughly mixes the material to give good heat transfer.

It was found and further contrary to the teaching of the prior art that by using fixed non-pivoting and non-touching sweeping blades according to the present invention such that there is substantially no direct contact of the leading edges of the blades with the inner surface of the heat exchanger the following advantages were observed; high turbulence and a thorough mixing action was observed achieving good heat transfer, whereby little or no product accumulation or burning was observed.

Without being bound by theory it is believed that the blades according to the invention, whereby there is no direct contact between the blades and the inner surface of the heat exchanger, create a pressure wave at the point of contact with the material being processed within the annular space defined by the rotatable shaft and the inner surface of the heat exchanger. This pressure wave it is believed agitates the mixture thereby effecting efficient heating and/or cooling. It is further advantages as there is little or no risk of the associated problems that conventional blades have for example product accumulation on the rear or trailing face of the blades leading to burnt product.

In further useful embodiment of this first aspect of the invention the scraped heat exchanger may optionally comprise one or more of the following preferred or optional features, elements and components thereof and/or one or more combinations thereof as follows:
The rotatable shaft may comprise a shaft that is capable of rotating at (and/or in the method of the invention rotates at a rotational speed of from 350 and 1000 ppm, more preferably from 400 to 800 rpm, even more preferably between 500 and 700 rpm, most preferably from 550 to 650 rpm.
The scraping element comprises a blade having an edge for scraping contact with the heat exchange surface wherein the blade comprises at least one aperture for engaging with the mounting means such that the blade is connected to the mounting means and wherein when the rotatable shaft is rotating relative to the heat exchange surface the scraping element has substantially no movement relative to the rotating shaft.
The scraping element comprises a blade having a plurality of substantially T-shaped apertures longitudinally arranged through the blade body for engaging with the mounting means and optionally the substantially T-shaped apertures may be linearly arranged adjacent between 2 and 10 mm, preferably 3 and 8 mm, more preferably 5 to 7 mm from the trailing edge of the blade. The substantially T-shaped element extends outwardly at a substantially right angle to the rotatable shaft and be suitable for engagement with a scraping element wherein said scraping element comprises a blade having a plurality of mating substantially T-shaped apertures longitudinally arranged through the blade body such that the blade is connected to the substantially T-shaped element characterised in that when the rotatable shaft is rotating relative to the heat exchange surface the blade has substantially no movement relative to the rotating shaft.

One embodiment of the present invention provides a method for preparing a food product comprising the step(s) of heating and/or agitating a food mixture in a scraped surface heat exchanger of the present invention comprising a heat exchange surface, a rotatable shaft, said shaft having at least one mounting means, and a scraping element wherein said scraping element comprises a blade having at least one aperture for engaging with the mounting means such that the scraping element is connected to the mounting means and wherein during the heating and/or agitating step when the rotatable shaft is rotating relative to the heat exchange surface the scraping element has substantially no movement relative to the rotating shaft. The heating and/or agitating step(s) may be simultaneous and/or sequential and preferably are both performed in the scraped surface heat exchanger of the invention.

Another embodiment of the present invention provides a method for preparing a food product by cooling and/or agitating a mixture in a scraped surface heat exchanger of the present invention comprising a heat exchange surface, a rotatable shaft, said shaft having at least one mounting means, and a scraping element wherein said scraping element comprises a blade having at least one aperture for engaging with the mounting means such that the scraping element is connected to the mounting means and wherein during the heating and/or agitating step when the rotatable shaft is rotating relative to the heat exchange surface the scraping element has substantially no movement relative to the rotating shaft. The cooling and/or agitating step(s) may be simultaneous and/or sequential and preferably are both performed in the scraped surface heat exchanger of the invention. The mounting means comprises at least one engagement means, wherein the engagement means comprises a projection extending outwardly at a substantially right angle to the rotatable shaft for engagement with the sweeping element so as to engage the sweeping element such that the sweeping element is connected to the mounting means wherein when the rotatable shaft is rotating relative to the heat exchange surface the sweeping element has substantially no movement relative to the rotating shaft and said sweeping element has substantially no contact with the inner surface of the heat exchanger. The projection comprises a substantially T-shaped element extending outwardly at a substantially right angle to the rotatable shaft for engagement with the sweeping element. A still further aspect of the invention comprises use of the any scraped heat exchanger of the invention as described or claimed herein to prepare a food product such as confectionery for example fat based confectionery, (such as chocolate) or fat based product or beverages such as coffee, tea or ice cream confectionery or dairy products or bakery products.

A yet further aspect of the invention comprises a process for preparing a food product as described herein the process comprising the step of heating / cooling and /or agitating an intermediate composition such as a fatty intermediate (e.g. chocolate mass) that is a precursor for the food product (e.g. fat based confectionery) with a scraped heat exchanger of the invention as described or claimed herein to obtain a food product (e.g. a fat based confectionery such as chocolate).

A still yet other aspect of the invention comprises a process for obtaining a food product and/or intermediate thereof (for example fat based confectionery, (such as chocolate) or fat based product or beverages such as coffee, tea or ice cream confectionery or dairy products or bakery products) obtained and/or obtainable by a method and/or apparatus of the present invention. Preferred food products are chocolate and coffee.

As used herein the term food product includes any product edible by humans or animals (preferably edible by humans) and thus encompasses beverages or other liquid foods as well as solid or other forms (under standard conditions). Preferably a food product denotes any substance that can be metabolized by an animal (preferably human) to give energy and build tissue.

As used herein the term 'chocolate' denotes any products that meet a legal definition of chocolate in any jurisdiction and also include products in which all or part of the cocoa butter are replaced by cocoa butter equivalents (CBE) and/or cocoa butter replacers (CBR). Chocolate coatings are also referred to herein as chocolate shells. The terms 'chocolate compound' or 'compound' as used herein (unless the context clearly indicates otherwise) denote chocolate analogues characterised by presence of cocoa solids (which include cocoa liquor/mass, cocoa butter and cocoa powder) in any amount, notwithstanding that in some jurisdictions compound may be legally defined by the presence of a minimum amount of cocoa solids. The term 'chocolate confectionery' as used herein denotes a foodstuff which comprises chocolate and/or compound as defined herein, and optionally also other ingredients.

Unless the context herein clearly indicates otherwise, preferred chocolate as used herein comprises any of the following: dark chocolate, baking chocolate, milk chocolate, sweet chocolate, semi-sweet chocolate, buttermilk chocolate, skim-milk chocolate, mixed dairy product chocolate, low fat chocolate, white chocolate, couverture, chocolate analogue, compound and/or any mixtures thereof.

Generally chocolate comprises a continuous fat phase, preferably comprising at least one cocoa and/or cocoa-like component. Suitable components of the fat phase and other components are well known to those skilled in the art.

The fat phase of the chocolate may comprise: cocoa butter, milk fat, other fats or oils and/or mixtures thereof. Non-standard chocolate results when one or more of these components are replaced in whole or in part, by equivalent components to produce similar organoleptic and/or flavour properties, which mean the composition no longer conforms to legal definitions for standard chocolate, although it may taste very similar.

### INTERMEDIATE

As used herein the term intermediate and/or fatty intermediate and/or precursor denotes a material formed during the process for making the food product for example for making a fat based confectionery product, such intermediate being in an unfinished form which still requires further processing before it is suitable for being sold a product (e.g. because it exhibits flavour, aesthetic, morphological and/or other properties which would still be undesirable to the end consumer without further processing and/or where the material requires further processing before it can be manipulated and/or packaging into suitable product forms).

### FAT

The term fat, as used herein, preferably refers to triglycerides, di-glycerides and/or monoglycerides that are suitable for use in edible foods such as fat based confectionery products like chocolate. Such fats are well known and widely available from common commercial sources and for example comprise naturally occurring and/or synthetically modified fats and oils: such as cocoa butter (including pressed, expelled solvent extracted and/or refined forms thereof, equivalents and/or substitutes therefor) milk fat (including anhydrous and/or fractionated forms thereof and/or replacers therefor), butter (including fractionated forms thereof), vegetable fats (including naturally modified and/or synthetically modified forms thereof). The fats may be solid or liquid and are preferably compatible with each other. If liquid fats or oils are used they may comprise those of plant origin; for example soybean oil, cottonseed oil, peanut oil, sunflower seed oil, rapeseed oil, olive oil, palm oil, coconut oil, palm kernel oil and/or suitable mixtures thereof.

### FAT CONTENT

The fat content of the fatty intermediate used in the invention is usefully at least 26% by weight, more usefully at least 27%, most usefully at least 28%.

The fat content of the fatty intermediate used in the invention is conveniently no more than 30 % by weight, more conveniently no more than 29%.

Preferably the fat content of the fatty intermediate used in the invention is from 27% to 29%, more preferably from 28% to 29%, most preferably about 28.5%.

Further aspects of the invention are described in the claims herein.

The object of the present invention is to solve some or all of the problems or disadvantages (such as identified herein) with the prior art.

The present invention will now be described in detail with reference to the following figures and non-limiting examples which are by way of illustration only.

### Brief description of the drawings

**Figure 1** is a perspective view illustrating the overall appearance of a scraped-surface heat exchanger according to one embodiment of the present invention.
**Figure 2** is a more detailed partially sectional view of a scraped surface heat exchanger according to one embodiment of the present invention
**Figure 3** is a perspective view of a blade according to one embodiment of the present invention.
**Figure 4a** is an elevational view of a T-shaped element relative to the rotatable shaft and a blade with a T-shaped aperture according to one embodiment of the invention.
**Figure 4b** is as Figure 4a but showing an elevational view of a blade locked into position on to the surface of the heat exchanger according to one embodiment of the invention.
**Figure 5** is a perspective view illustrating the overall appearance of a scraped-surface heat exchanger according to another embodiment of the present invention.
**Figure 6** is a view of a blade showing wear and burnt product accumulation.

### Examples and Further Embodiments

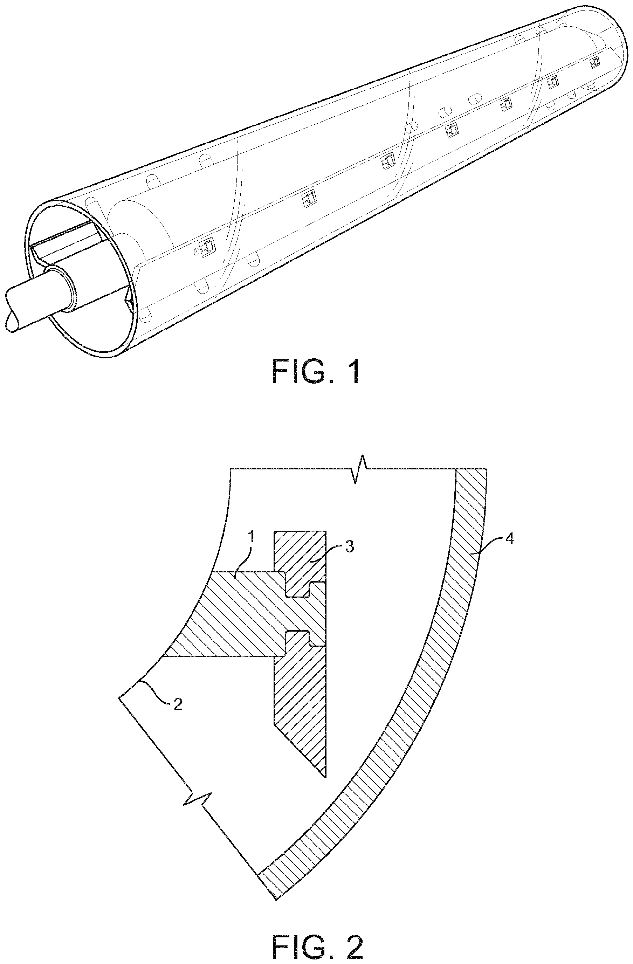

As illustrated in Figure 1 a preferred embodiment of the present invention provides a scraped surface heat exchanger comprising a cylindrical chamber having a heat exchange surface (4) through which a mixture is caused to travel. This chamber is surrounded by a jacket (X) through which a heating or cooling means may be circulated which provides heat exchange by a usual heat exchange process. At one end of the chamber is provided an inlet (X) and at its opposite end is an outlet (X) through which the mixture may pass. Inside the chamber a rotatable shaft (2) is rotatably mounted and on the rotatable shaft a longitudinal blade (3) for sweeping mixtures is securely mounted.

Figure 2 illustrates a preferred embodiment of the present invention wherein the blade (3) with a non-contacting blade edge (X) is at a distance away from the inner surface of the heat exchange surface (X). The rotatable shaft (2) and the inner surface of the heat exchange surface (X) are defining an annular space (X) therein.

Figure 2a illustrates a preferred embodiment of the present invention wherein the blade (3) with a blade edge (X) bearing on the inner surface of the heat exchange surface (X). The rotatable shaft (2) and the inner surface of the heat exchange surface (X) are defining an annular space (X) therein

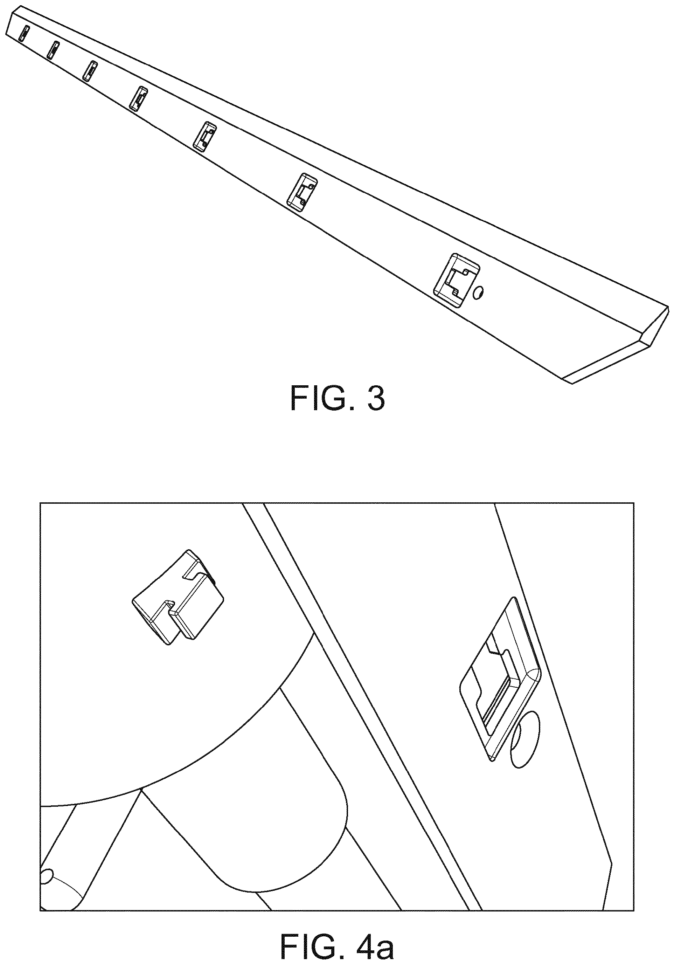

Figure 3 is showing the geometry of a preferred embodiment of the blade (3) according to the present invention. The blade comprising a plurality of substantially T-shaped apertures (X) longitudinally arranged through the blade body for engaging with the mounting means (1).

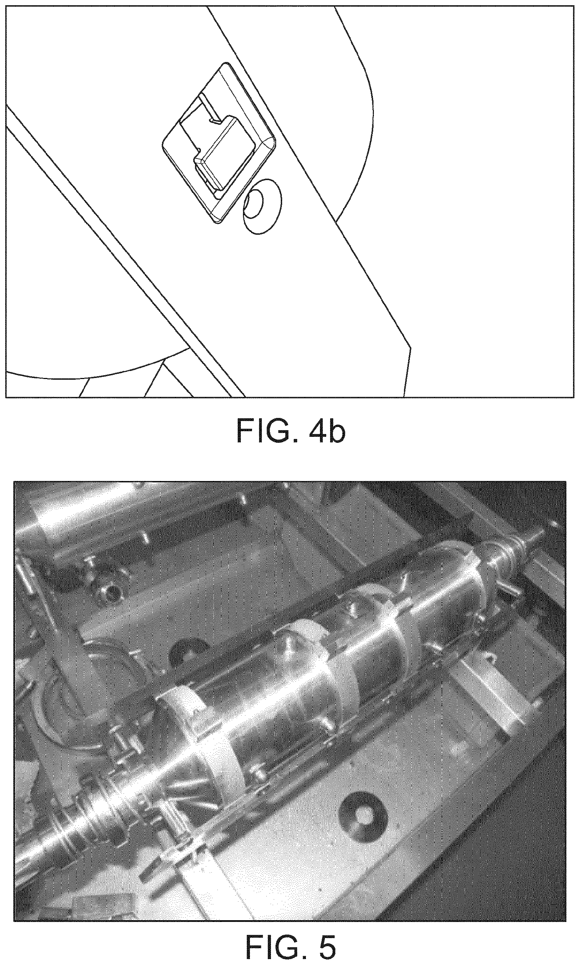

Figures 4a and 4b illustrates how the blade (3) is attached to the rotatable shaft (2). The blade (3) is offered to the mounting means (1) such that the mounting means on the shaft can pass through the blade until the blade rests on the broadest planar surface of the mounting means. The blade is then slid in a direction parallel to the rotatable shaft's main axis until the aperture in the blade aligns with the projected mounting means. A fixing bolt is inserted and tightened.

Figure 5 is a photograph of a heat exchanger according to another embodiment of the present invention

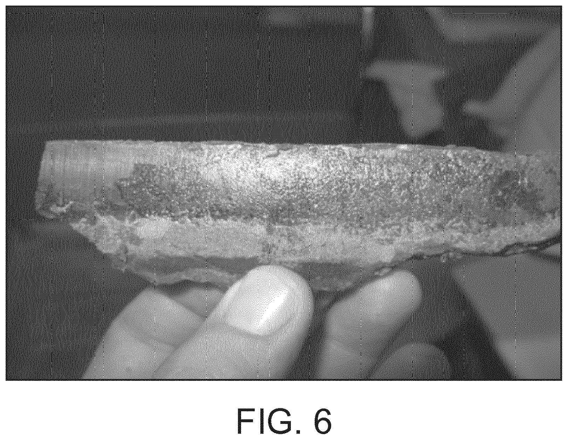

Figure 6 shows a damaged scraper blade from a prior art heat exchanger, where the blade is not arranged in the manner described herein for heat exchangers of the invention and thus scrapes the inner surface of the heat exchanger and moves tangentially and radially relative to the shaft.

According to the present invention a 'scraped surface heat exchanger' includes any heat exchanger comprising a heat exchange surface, a rotatable shaft and a sweeping element. In one embodiment the scraped surface heat exchanger may be a non-cylindrical heat exchanger such as oval shaped. In a preferred embodiment the scraped surface heat exchanger is a cylindrical heat exchanger.

Preferably according to the invention the rotatable shaft may be mounted concentrically or eccentrically to the heat exchanger, more preferably the rotatable shaft is preferably mounted concentrically relative to the cylindrical heat exchanger.

As used herein, the rotatable shaft is defined as a revolving rod that transmits rotational motion. In a preferred embodiment of the invention the rotatable shaft bears at least one mounting means for engaging with the scraping element, preferably between 3 and 15 mounting means for engaging with the scraping element, more preferably between 5 and 10 mounting means for engaging with the scraping element.

According to another preferred embodiment of the present invention the rotatable shaft has an optimal rotational speed of from 350 and 1000 rpm, more preferably from 400 to 800 rpm, even more preferably between 500 and 700 rpm, most preferably from 550 to 650 rpm, for example from 575 to 625 rpm, e.g. about 600 rpm.

A further aspect of the invention comprises a method of operating a heat exchanger of the invention as described herein, in which the shaft is a rotatable shaft; the method comprising the step of rotating the shaft at a rotational speed as given herein.

As used herein, substantially no movement is defined as no movement, preferably as locked against moment, more preferably as no radial and no tangential movement of the blades relative to the rotatable shaft.

As used herein, substantially no contact is defined as no contact, or no scraping contact or non-touching or no touching.

As used herein sweeping element is defined as a blade, preferably a blade having a leading edge wherein leading edge having no direct contact with the inner surface of the heat exchanger and having a leading edge with a distance of 0.05 mm to 10 mm, preferably 0.1 mm to 8mm, more preferably 0.2 to 5 mm from the inner surface of the heat exchanger. Preferably according to the present invention, the sweeping element comprises blades having as more preferably between 95 to 99% of the time, more preferably 100% of the time no movement relative to the rotatable shaft, when the rotatable shaft is rotating relative to the heat exchange surface.

Preferably according to the present invention, the sweeping element comprises blades having as more preferably between 95 to 99% of the time, more preferably 100% of the time no contact with the inner surface of the heat exchanger, when the rotatable shaft is rotating relative to the heat exchange surface.

Preferably in one embodiment of the present invention the sweeping element comprises at least one blade having a leading edge with a distance of 0.1 mm to 10 mm, preferably 0.1 mm to 5mm, more preferably 0.2 to 3 mm, most preferably 0.25 to 2 mm from the inner surface of the heat exchanger.6

According to the invention the mounting means comprises at least one engagement means so as to engage the scraping element, preferably the mounting means comprises between 3 and 15 engagement means, more preferably between 5 and 10 engagement means.

In the invention the engagement means comprises a projection extending outwardly at a substantially right angle to the rotatable shaft for engagement with the sweeping element. The engagement means is a projection wherein said projection is a substantially T-shaped element.

In the invention the engagement means comprises a substantially T-shaped element extending outwardly at a substantially right angle to the rotatable shaft for engagement with the sweeping element.

The substantially T-shaped element extending outwardly at a substantially right angle to the rotatable shaft is suitable for engagement with a sweeping element wherein said sweeping element comprises a blade having a plurality of mating substantially T-shaped apertures longitudinally arranged through the blade body.

In one embodiment of the present invention the substantially T-shaped element extending outwardly at a substantially right angle to the rotatable shaft are suitable for engagement with a sweeping element wherein said sweeping element comprises a blade having a plurality of mating substantially T-shaped apertures longitudinally arranged through the blade body such that the blade is connected to the substantially T-shaped element characterised in that when the rotatable shaft is moving in periodic motion (preferably rotating) relative to the heat exchange surface the sweeping element has substantially no contact with the inner surface of the heat exchanger.

In a preferred embodiment of the invention the substantially T-shaped element extending outwardly at a substantially right angle to the rotatable shaft engages with a blade having a plurality of mating substantially T-shaped apertures such that when the rotatable shaft is rotating relative to the heat exchange surface the sweeping element is substantially locked against movement relative to the rotatable shaft and said sweeping element has substantially no contact with the inner surface of the heat exchanger.

In a preferred embodiment of the invention the substantially T-shaped element extending outwardly at a substantially right angle to the rotatable shaft engages with a blade having a plurality of mating substantially T-shaped apertures such that when the rotatable shaft is rotating relative to the heat exchange surface the sweeping element is substantially locked against movement relative to the rotatable shaft and said sweeping element is clear of the inner surface of the heat exchanger.

Preferably, the apertures are proximate to the trailing edge of the blade, said apertures being linearly arranged adjacent to the trailing edge of the blade.

The apertures are substantially T-shaped and are proximate to the trailing edge of the blade, said substantially T-shaped apertures preferably being linearly arranged adjacent to the trailing edge of the blade.

More preferably, the substantially T-shaped apertures are linearly arranged between 2 and 10 mm, preferably 3 and 8mm, more preferably 5 to 7 mm from the trailing edge of the blade.

In a preferred embodiment the apertures comprise a longitudinal portion having between 10 and 30 mm, preferably 15 and 25 mm and more preferably 17 and 20 mm in length. Preferably the T-shaped aperture comprises a vertical section having a width of between 3 and 15 mm, preferably 5 and 10 mm, most preferably between 6 and 8mm.

Preferably the T-shaped aperture comprises a horizontal section, perpendicular to the rotatable shaft having a width 30 and 50 mm, preferably 20 and 40 mm and more preferably 15 and 20 mm.

According to the invention the sweeping element comprises a blade, preferably an elongated blade, more preferably a plurality of elongated blades.

Suitable materials for use as a blade include metal preferably steel or any polymeric material.

As used herein, substantially no contact is defined as no contact, or no scraping contact or non-touching or no touching or non-scraping

As used herein, substantially no movement is defined as no movement, preferably as locked against moment, more preferably as no radial and no tangential movement of the blades relative to the rotatable shaft.

As used herein non pivotal connection is defined as connection whereby there is no tangential or radial movements relative to the connection point.

Preferably according to the invention there is no tangential movement of the blade relative to the rotatable shaft.

Preferably according to the invention there is no radial movement of the blade relative to the rotatable shaft.

As used here herein substantially right angle is defined as 90 degrees. The present invention also relates to a method for preparing a food product by heating and agitating a mixture in a scraped surface heat exchanger according to the present invention. The present invention also relates to a method for preparing a food product by cooling and agitating a mixture in a scraped surface heat exchanger according to the present invention.

A method according to the present invention wherein said food product may include, confectionery or fat based product or beverages such as coffee, tea or ice cream confectionery or dairy products or bakery products.

More preferably method for preparing a confectionery product by heating and agitating a chocolate mixture in a scraped surface heat exchanger according to the present invention. More preferably method for preparing a confectionery product by cooling and agitating a chocolate mixture in a scraped surface heat exchanger according to the present invention.

## Claims

1. A scraped surface heat exchanger comprising a heat exchange surface, a rotatable shaft, said shaft having at least one mounting means, and a sweeping element wherein said sweeping element comprises a blade having at least one aperture for engaging with the mounting means such that the sweeping element is connected to the mounting means and wherein when the rotatable shaft is rotating relative to the heat exchange surface the sweeping element has substantially no movement relative to the rotating shaft and said sweeping element has substantially no contact with the inner surface of the heat exchanger, and the mounting means comprises at least one engagement means, wherein the engagement means comprises a projection extending outwardly at a substantially right angle to the rotatable shaft for engagement with the sweeping element so as to engage the sweeping element such that the sweeping element is connected to the mounting means, wherein the projection is a substantially T-shaped element extending outwardly at a substantially right angle to the rotatable shaft for engagement with the sweeping element and **characterised in that** the blade has a leading edge with a distance of 0.05 mm to 10 mm from the inner surface of the heat exchange and the blade has a plurality of substantially T-shaped apertures longitudinally arranged through the blade body for engaging with the mounting means.

2. A scraped surface heat exchanger according to claim 1 wherein the sweeping element comprises a blade having a leading edge with a distance of 0.1 mm to 8mm, preferably 0.2 to 5 mm from the inner surface of the heat exchanger.

3. A scraped surface heat exchanger according to any of the preceding claims wherein the rotatable shaft comprises a rotational speed of from 350 to 1000 rpm, more preferably from 400 to 800 rpm, even more preferably between 500 and 700 rpm, most preferably from 550 to 650 rpm.

4. A scraped surface heat exchanger according to any of claims 1 to 3, wherein said substantially T-shaped apertures being linearly arranged adjacent between 2 and 10 mm, preferably 3 and 8 mm, more preferably 5 to 7 mm from the trailing edge of the blade.

5. A method for preparing a food product by heating or cooling and agitating a mixture in a scraped surface heat exchanger according to claim 1.

## Patentansprüche

1. Kratzwärmetauscher, umfassend eine Wärmetauscheroberfläche, eine drehbare Welle, wobei die Welle mindestens ein Befestigungsmittel aufweist, und ein Wischelement, wobei das Wischelement eine Klinge mit mindestens einer Öffnung zum Eingriff mit dem Befestigungsmittel umfasst, derart, dass das Wischelement mit dem Befestigungsmittel verbunden ist, und wobei, wenn sich die drehbare Welle relativ zu der Wärmetauscheroberfläche dreht, das Wischelement im Wesentlichen keine Bewegung relativ zu der drehenden Welle aufweist und das Wischelement im Wesentlichen keinen Kontakt mit der Innenoberfläche des Wärmetauschers aufweist, und das Befestigungsmittel mindestens ein Eingriffsmittel umfasst, wobei das Eingriffsmittel einen Vorsprung umfasst, der sich in einem im Wesentlichen rechten Winkel zu der drehbaren Welle nach außen erstreckt, um mit dem Wischelement in Eingriff zu kommen, um mit dem Wischelement derart in Eingriff zu kommen, dass das Wischelement mit dem Befestigungsmittel verbunden ist, wobei der Vorsprung ein im Wesentlichen T-förmiges Element ist, das sich in einem im Wesentlichen rechten Winkel zu der drehbaren Welle nach außen erstreckt, um mit dem Wischelement in Eingriff zu kommen, und **dadurch gekennzeichnet, dass** die Klinge eine Vorderkante mit einem Abstand von 0,05 mm bis 10 mm von der Innenfläche des Wärmetauschers entfernt ist und die Klinge eine Vielzahl von im Wesentlichen T-förmigen Öffnungen aufweist, die in Längsrichtung durch den Klingenkörper hindurch angeordnet sind, um mit dem Befestigungsmittel in Eingriff zu kommen.

2. Kratzwärmetauscher nach Anspruch 1, wobei das Wischelement eine Klinge mit einer Vorderkante aufweist, die einen Abstand von 0,1 mm bis 8 mm, vorzugsweise 0,2 bis 5 mm von der Innenfläche des Wärmetauschers aufweist.

3. Kratzwärmetauscher nach einem der vorstehenden Ansprüche, wobei die drehbare Welle eine Drehgeschwindigkeit von 350 bis 1000 U/min, mehr bevorzugt von 400 bis 800 U/min, noch mehr bevorzugt zwischen 500 und 700 U/min, am meisten bevorzugt von 550 bis 650 U/min, umfasst.

4. Kratzwärmetauscher nach einem der Ansprüche 1 bis 3, wobei die im Wesentlichen T-förmigen Öffnungen linear angrenzend zwischen 2 und 10 mm, vorzugsweise 3 und 8 mm, mehr bevorzugt 5 bis 7 mm von der Hinterkante der Klinge angeordnet sind.

5. Verfahren zur Herstellung eines Lebensmittelprodukts durch Erhitzen oder Kühlen und Rühren einer Mischung in einem Kratzwärmetauscher nach Anspruch 1.

## Revendications

1. Échangeur de chaleur à surface raclée comprenant une surface d'échange de chaleur, un arbre rotatif, ledit arbre ayant au moins un moyen de montage, et un élément de balayage dans lequel ledit élément de balayage comprend une lame ayant au moins une ouverture pour venir en prise avec le moyen de montage de telle sorte que l'élément de balayage est relié au moyen de montage et dans lequel lorsque l'arbre rotatif tourne par rapport à la surface d'échange de chaleur l'élément de balayage n'a sensiblement aucun mouvement par rapport à l'arbre rotatif et ledit élément de balayage n'a sensiblement aucun contact avec la surface interne de l'échangeur de chaleur, et le moyen de montage comprend au moins un moyen de mise en prise, dans lequel le moyen de mise en prise comprend une saillie s'étendant vers l'extérieur selon un angle sensiblement droit par rapport à l'arbre rotatif pour venir en prise avec l'élément de balayage de manière à venir en prise avec l'élément de balayage de telle sorte que l'élément de balayage est relié au moyen de montage, dans lequel la saillie est un élément sensiblement en forme de T s'étendant vers l'extérieur selon un angle sensiblement droit par rapport à l'arbre rotatif pour venir en prise avec l'élément de balayage et **caractérisé en ce que** la lame a un bord d'attaque avec une distance de 0,05 mm à 10 mm de la surface interne de l'échange de chaleur et la lame a une pluralité d'ouvertures sensiblement en forme de T agencées longitudinalement à travers le corps de lame pour venir en prise avec le moyen de montage.

2. Échangeur de chaleur à surface raclée selon la revendication 1 dans lequel l'élément de balayage comprend une lame ayant un bord d'attaque avec une distance de 0,1 mm à 8 mm, de préférence de 0,2 à 5 mm de la surface interne de l'échangeur de chaleur.

3. Échangeur de chaleur à surface raclé selon l'une quelconque des revendications précédentes dans lequel l'arbre rotatif comprend une vitesse de rotation de 350 à 1 000 tr/min, plus préférablement de 400 à 800 tr/min, encore plus préférablement entre 500 et 700 tr/min, le plus préférablement de 550 à 650 tr/min.

4. Échangeur de chaleur à surface raclé selon l'une quelconque des revendications 1 à 3, dans lequel lesdites ouvertures sensiblement en forme de T sont agencées linéairement de manière adjacente entre 2 et 10 mm, de préférence 3 et 8 mm, plus préférablement 5 à 7 mm du bord de fuite de la lame.

5. Procédé de préparation d'un produit alimentaire par chauffage ou refroidissement et agitation d'un mélange dans un échangeur de chaleur à surface raclée selon la revendication 1.
